# EUROPÄISCHE PATENTSCHRIFT

(11) **EP 2 467 228 B1**
(45) Veröffentlichungstag und Bekanntmachung des Hinweises auf die Patenterteilung: **27.07.2016**
(21) Anmeldenummer: 09781912.2
(22) Anmeldetag: 17.08.2009
(51) Int. Cl.: B23K 26/382, B23K 26/384

(54) **VERFAHREN ZUR HERSTELLUNG EINES ASYMMETRISCHEN DIFFUSORS UNTER VERWENDUNG VERSCHIEDENER LASERSTELLUNGEN**
Method for making a hole using different laser positions
Procédé de création d'un trou en utilisant divers réglages laser

(43) Veröffentlichungstag der Anmeldung: 27.06.2012
(73) Patentinhaber: Siemens Aktiengesellschaft, 80333 München (DE)
(72) Erfinder: MÜNZER, Jan, 10439 Berlin (DE); PODGORSKI, Thomas, 16515 Oranienburg OT Lehnitz (DE)
(86) Internationale Anmeldenummer: PCT/EP2009/060623
(87) Internationale Veröffentlichungsnummer: WO 2011/020490

(56) Entgegenhaltungen:
- EP-A1- 0 950 463
- EP-A2- 1 813 378
- US-A- 5 747 769
- US-A1- 2004 232 122
- US-B1- 6 359 254
- US-B1- 6 420 677
- US-B1- 6 744 010

## Beschreibung

Die Erfindung betrifft ein Verfahren zur Herstellung eines Filmkühllochs gemäß dem Oberbegriff des Anspruchs 1. Die EP 950 463 offenbart ein solches Verfahren.

Die Verwendung des Lasers zur Herstellung von Löchern in Substraten ist bekannt, wobei auch der Laser über die Oberfläche verfahren wird.

Verfahren zur Fertigung von Bohrungen mit seitlich begrenzenden Flanken sind im Stand der Technik bekannt. So ist in der US 6,420,677 ein Verfahren zur lasergestützten Ausbildung von Kühlluftbohrungen in Turbinenschaufeln beschrieben. Dabei ist vorgesehen, eine Folge von Laserpulsen auf die Oberfläche der Turbinenschaufel abzugeben, wobei Teile des Turbinenmaterials verdampft werden, so dass eine Bohrung entlang einer Z-Achse ausgebildet wird.

Die EP 0 950 463 A1 beschreibt ein Verfahren zur Herstellung einer nicht-kreisförmigen Kühlluftbohrung mit einem Diffusor.

Es ist daher Aufgabe der vorliegenden Erfindung, ein gegenüber dem genannten Stand der Technik vorteilhaftes Verfahren anzugeben.

Diese Aufgabe wird gelöst durch ein Verfahren gemäß Anspruch 1.

Diese Aufgabe wird erfindungsgemäß dadurch gelöst, dass in mehreren Fertigungsschritten jeweils ein Teilvolumen des Lochs ausgebildet wird.

Mit dem erfindungsgemäßen Verfahren wird ein Verfahren zur Herstellung eines asymmetrischen Diffusors zur Verfügung gestellt, bei dem keine Beschädigung der Bohrungsflanke durch Wechselwirkung mit dem Laserstrahl auftritt.

In dem Verfahren ist es möglich, dass nur ein Laser verwendet wird. Es besteht aber auch die Möglichkeit, dass zumindest zwei Laser, insbesondere nur zwei Laser verwendet werden, die unterschiedliche Leistungsmerkmale aufweisen.

In den Unteransprüchen sind weitere vorteilhafte Maßnahmen aufgelistet, die beliebig miteinander kombiniert werden können, um weitere Vorteile zu erzielen.

Grundgedanke der Erfindung ist es somit, das Gesamtvolumen der zu fertigenden Bohrung in Teilvolumen aufzuteilen und diese in einzelnen Fertigungsschritten auszubilden. Das Bauteilmaterial einiger einzelner Teilvolumina wird entfernt, indem jeweils eine seitliche Flanke der Bohrung mit dem Laserstrahl abgefahren wird.

Dabei wird der Laserstrahl vorzugsweise so ausgerichtet, dass er mit der abgefahrenen Flanke einen Winkel größer 8° einschließt. Da der Laserstrahl während der Fertigung der Bohrung nicht nah zu und parallel mit der bereits ausgebildeten Flanke der Bohrung auf die Bauteiloberfläche gerichtet wird, ist ausgeschlossen, dass es zu einer unzulässigen Wechselwirkung zwischen dem Laserstrahl und der Flanke kommt. Weiterhin erlaubt die Aufteilung des Gesamtvolumens der Bohrung in mehrere Teilvolumina komplexe Bohrungsgeometrien auszubilden.

Anstelle des Lasers können auch Elektronenstrahlen verwendet werden.

Gemäß einer weiteren Ausbildung der Erfindung ist vorgesehen, dass der Laserstrahl so ausgerichtet wird, dass er mit der abgefahrenen Flanke einen Winkel größer 10° und kleiner 90°, bevorzugt von größer 15° und kleiner 80° und besonders bevorzugt von größer 20° und kleiner 60° einschließt. Insbesondere bevorzugt ist ein Winkel von 9°.

In Weiterbildung der Erfindung ist vorgesehen, einen gepulsten Laserstrahl auf die Bauteil-Oberfläche ein Loch zu richten. Dabei kann ein Laserstrahl mit variabler Pulsbreite verwendet werden. Die Pulsbreite kann im Bereich von 50ns bis 800ns, bevorzugt von 70ns bis 600ns und insbesondere von 200ns bis 500ns liegen. Besonders bevorzugt ist eine Pulsbreite von 400ns. Mit einem solchen gepulsten Laserstrahl kann das Bauteilmaterial besonders schnell verdampft werden. Dies ist besonders vorteilhaft für die Herstellung des Diffusors.

Vorteilhafter Weise kann auch ein Laserstrahl mit einer Frequenz im Bereich von 20kHz bis40 kHz, bevorzugt von 25kHz bis 35kHz und insbesondere von 28kHz bis 32kHz auf die Bauteiloberfläche gerichtet werden.
Dies ist besonders vorteilhaft für die Herstellung des Diffusors.

Es zeigen:
- Figur 1: ein herzustellendes Filmkühlloch und
- Figuren 2-8: schematische Darstellungen des Ablaufs des Verfahrens,
- Figur 9: eine Gasturbine,
- Figur 10: eine Turbinenschaufel und
- Figur 11: eine Liste von Superlegierungen.

Die Beschreibung und die Figuren stellen nur Ausführungsbeispiele der Erfindung dar.

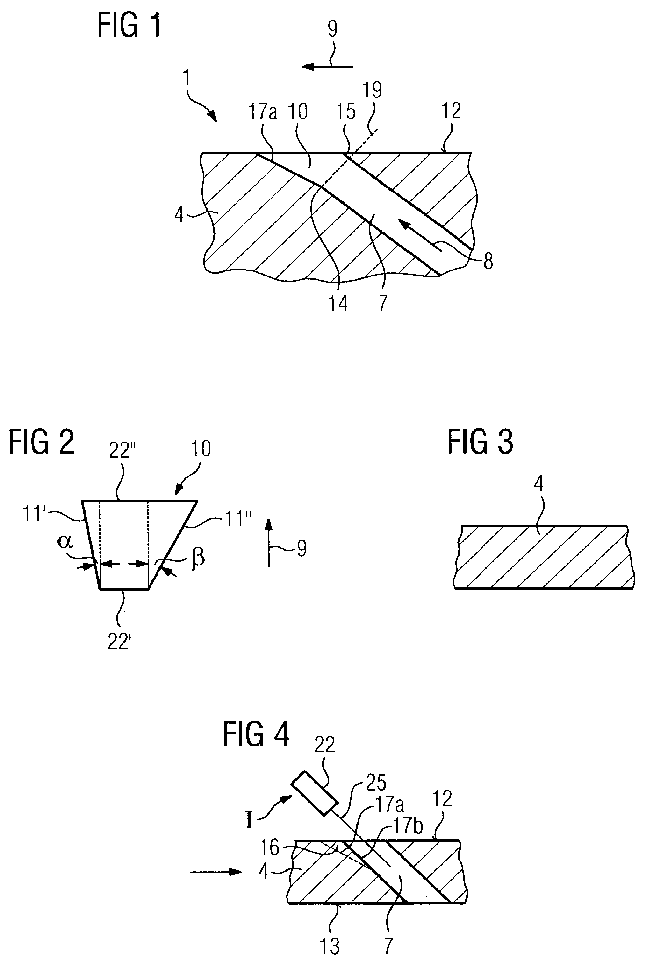

In Figur 1 ist ein Loch 1 in einem Substrat 4 dargestellt. Das Loch 1 ist vorzugsweise ein durchgehendes Loch, kein Sackloch.

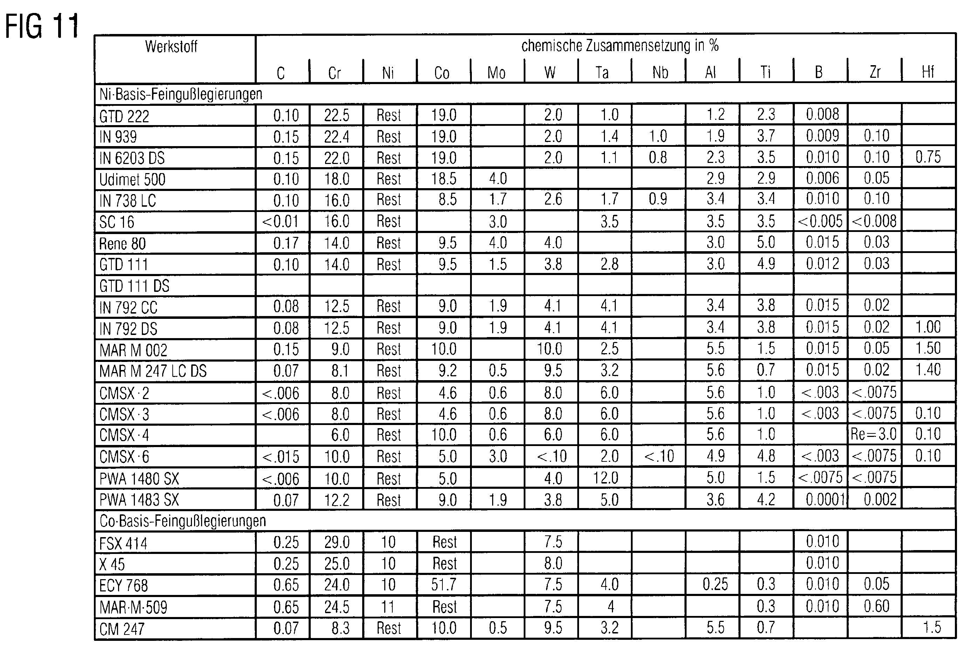

Das Substrat 4 weist insbesondere bei Turbinenschaufeln 120, 130 eine nickel- oder kobaltbasierte Superlegierung gemäß Figur 11 auf.

Das Filmkühlloch 1 weist zumindest zwei verschieden ausgeführte Abschnitte 7, 10 auf, insbesondere nur zwei Abschnitte 7, 10.
Der erste Abschnitt ist ein Innenanteil 7, der im Querschnitt vorzugsweise zylindrisch oder rotationssymmetrisch ausgebildet ist oder zumindest einen konstanten Querschnitt in einer Ausströmrichtung 8 aufweist.
Das Filmkühlloch 1 wird in einer Überströmrichtung 9 eines Heißgases überströmt. Die Ausströmrichtung 8 des Kühlmediums und Überströmrichtung 9 bilden einen spitzen Winkel miteinander.

Ab einer gewissen Tiefe unterhalb einer äußeren Oberfläche 12 des Substrats 4 zur Oberfläche 12 hin verbreitert sich der Querschnitt des Filmkühllochs 1 gegenüber dem Innenteil 7. Dies stellt den Diffusor 10 dar. An einem Knickpunkt 14 einer linken Fläche 17a des Filmkühllochs 1, der den Übergang vom Diffusor 10 zum Innenanteil 7 gegenüberliegend darstellt, schneidet eine Senkrechte 19 auf der Innenfläche 17a einen gegenüberliegenden Abschnitt 15 im Substrat 4 an der Oberfläche 12.

Figur 2 zeigt eine Draufsicht auf die Oberfläche 12 mit dem Diffusor 10 gemäß Figur 1.
In Überströmrichtung 9 weist der Diffusor 10 auf der Oberfläche 12 eine Vorderkante 22' und eine Hinterkante 22" (hier vorzugsweise geradlinig, können aber auch gekrümmt sein). Die seitlichen Flanken 11', 11" (hier vorzugsweise geradlinig, können aber auch gekrümmt sein) des Diffusor 10 weisen zur Vorderkante 22' zwei verschiedene Winkel α, β auf.
Der Diffusor 10 ist quer zur Überströmrichtung 9 verbreitert und weist gegenüber der gestrichelt angedeuteten Verlängerung des Innenteils 7 Flanken 11', 11" auf, die zwei verschiedene Winkel α und β aufweisen.
Vorzugsweise ist α < β; α, β <90°. In den Figuren 3 bis 8 ist der schematische Ablauf des Verfahrens zur Herstellung des Lochs 1 dargestellt. Die Bearbeitung erfolgt vorzugsweise im "trepanning".
Das Verfahren beginnt mit der Bereitstellung des Substrats 4 (Fig. 3), das dann mit einem Laser 22 oder Elektronenstrahlquelle in einer ersten Winkelstellung (I), vorzugsweise der ersten Laserstellung (I) bearbeitet wird (Fig. 4).
Im Folgenden wird der Laser als Bearbeitungsmaschine exemplarisch verwendet.

Dabei wird der Innenanteil 7 von der Oberfläche 12 bis zur gegenüberliegenden inneren Fläche 13 des Substrats 4 (im Hohlraum) des Substrats 4 hergestellt (Fig. 4).
Vorzugsweise muss der Laser 22 dabei nicht verfahren werden ("percussion"). Dabei verbleibt ein Rest 16, um den Diffusor 10 fertig zu stellen (Fig. 4).. Der Innenanteil 7 ist fertig gestellt.

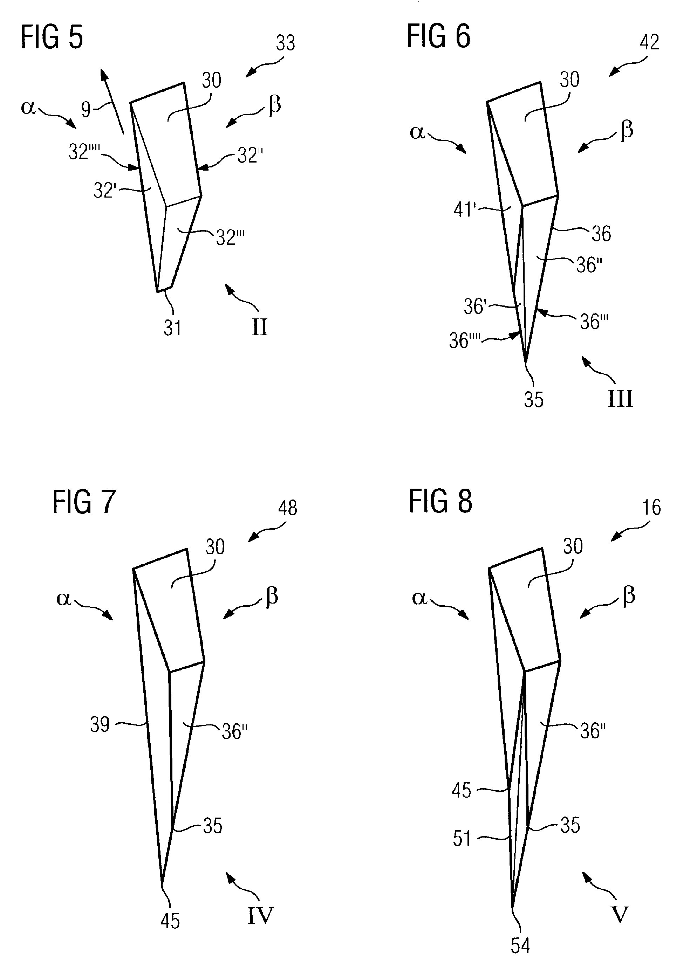

In Figur 8 ist der noch abzutragende Bereich 16 (Fig. 4) nach Herstellung des Innenanteils 7 dargestellt.
Dieses abzutragende Volumen 16 wird in vier Teilschritten abgetragen.

In den Figuren 5 bis 8 ist die Abtragung des Restes 16 dargestellt. Dargestellt mit α und β ist die Orientierung des Restes 16 bezüglich der Winkel α und β (Fig. 2).

Das erste abzutragende Volumen 33 des Restes 16 ist in Figur 5 dargestellt.
Das erste Teilvolumen 33 stellt einen Polyeder dar mit einer viereckigen Grundfläche 30 (in der Zeichnung oben), zwei dreieckigen Seitenflächen 32', 32" sowie zwei gegenüberliegende Vierecken 32"', 32"" als Seitenflächen.
Ebenso dargestellt ist die Überströmrichtung 9, die über der Grundfläche 30 verläuft, d.h. die Grundfläche 30 ist der Oberfläche 12 am nächsten.
Die Fläche 32"" liegt auf der Innenfläche des Diffusors 10. Dieses Teilvolumen 33 wird in der zweiten Laserstellung II, die von der ersten Laserstellung I verschieden ist, hergestellt.
Die Kante 31, die von den Seitenflächen 32"', 32"" gebildet wird, ist zum Inneren des Innenanteils 7 ausgerichtet. Das Teilvolumen 33 ist ein Pentaeder (fünfflächiger Polyeder).

In einem dritten Schritt gemäß Figur 6 wird ein weiteres Teilvolumen 36 abgetragen.
Das zweite abzutragende Teilvolumen 36 grenzt an die vordere Vierecksfläche 32'" gemäß Figur 5 an, wobei das Teilvolumen 36 ebenfalls einen Polyeder mit viereckiger Grundfläche (= Fläche 32"') darstellt, die die Berührungsfläche zu dem Polyeder 33 darstellt und vier dreieckige Flächen 36', 36", 36"', 36"". Die Teilvolumen 33 und 36 ergeben ein Teilvolumen 42, eine viereckige Grundfläche 30 mit 4 dreieckigen Seitenflächen 41' darstellt. Das Teilvolumen 36 weist eine Spitze 35 auf.
Sowohl das Teilvolumen 36 und Teilvolumen 42 (= 33 + 36) stellen ein Pentaeder dar.
Dieses Teilvolumen 36 wird in der zweiten Laserstellung III, die von der ersten Laserstellung II verschieden ist, hergestellt.

In Figur 7 ist dargestellt, wie ein drittes Teilvolumen 39 anschließend an die Teilvolumina 33, 36 bzw. Teilvolumen 42 gemäß Figur 5, 6 hergestellt wird.
Dies ergibt das Teilvolumen 48.
Hier wird ein Teilvolumen 39 in einer vierten Laserstellung IV abgetragen, das 39 an die linke Seitenfläche 41' des Polyeders 42 (Fig. 6) angrenzt, also der Seite mit dem kleineren Winkel α.
Die Laserstellung IV ist von der Laserstellung III verschieden und insbesondere auch von den Laserstellungen I, II.
Die Grundfläche des Teilvolumens 39 ist dreieckig und grenzt an die Berührungsfläche 41' des Polyeders 42 an, wobei die Spitze 35 des Teilvolumens 36 und zur Spitze 45 verlängert wurde und ein neues Teilvolumen 48 ergibt.

In einer neuen geänderten fünften Stellung V (Fig. 8) wird ein weiteres Teilvolumen 51 abgetragen, so dass der abzutragende Bereich 16 vollständig abgetragen ist.

Durch das Teilvolumen 51 wird deren Spitze 54 wiederum gegenüber der Spitze 45 verlängert und grenzt an die Flanke des Diffusors mit dem kleineren Winkel α an.
Die Laserstellung V ist vorzugsweise von der Laserstellung IV verschieden und vorzugsweise auch von den Laserstellungen I, II, III.
Die Erzeugung des Filmkühllochs 1 kann auch wie oben beschrieben erfolgen, wenn eine metallische Haftvermittlerschicht, vorzugsweise des Typs MCrAlY und/oder eine keramische auf dieser Schicht oder dem Substrat 4 vorhanden ist.

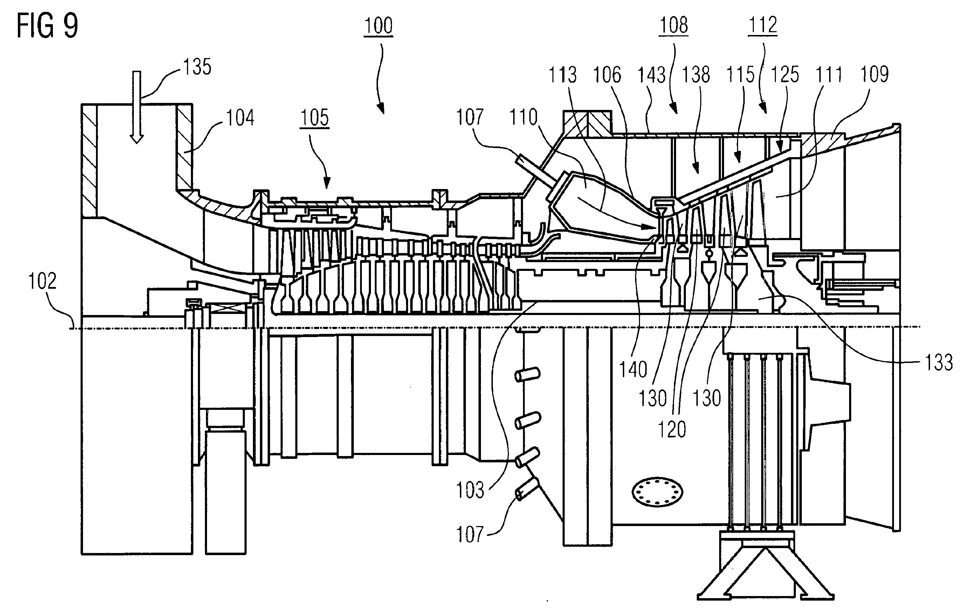

Die Figur 9 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 gefuhrt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

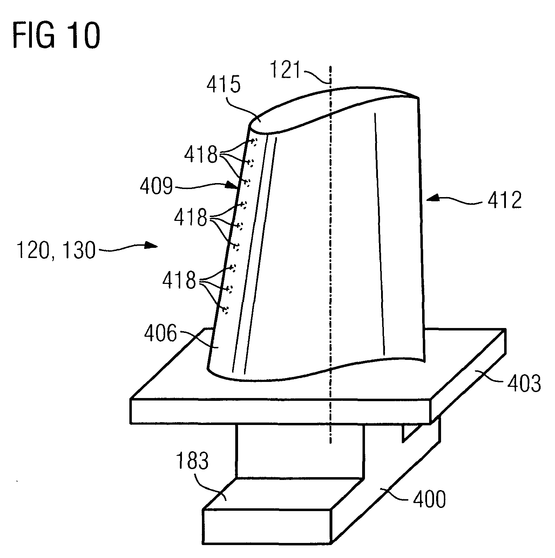

Die Figur 10 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelformige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren zur Herstellung eines komplexen durchgehenden Filmkühllochs (1) in einem Substrat (4),
das (1) einen Innenanteil (7),
und einen asymmetrischen Diffusor (10) aufweist,
dessen (10) Querschnitt von dem Querschnitt des Innenanteils (7) abweicht,
bei dem zumindest ein Laser (22) oder eine Elektronenstrahlquelle zur Herstellung von Innenanteil (7) und Diffusor (10) verwendet wird,
**dadurch gekennzeichnet, dass**
- in mehreren Fertigungsschritten jeweils ein Teilvolumen des Filmkühllochs (1) ausgebildet wird,
- die Winkelstellung des Lasers (22) bzw. der Elektronenstrahlquelle gegenüber dem Substrat diskontinuierlich verändert wird,
- fünf Winkelstellungen (I, II, III, IV, V) des Lasers (22) bzw. der Elektronenstrahlquelle gegenüber dem Substrat (4) zur Herstellung des Filmkühllochs (1) verwendet werden, wobei in jeder Winkelstellung des Lasers (22) ein Teilvolumen des Filmkühllochs (1) in dem Substrat (4) ausgebildet wird.

2. Verfahren nach Anspruch 1,
**dadurch gekennzeichnet, dass**
zuerst der Innenanteil (7) des Filmkühllochs (1) hergestellt wird,
wobei auch gleichzeitig ein Teil des Diffusors (10) hergestellt wird,
wobei der noch verbliebene Rest (16) zur Herstellung des Diffusors (10) in zumindest vier Teilschritten (II, III, IV, V) abgetragen wird,
insbesondere in nur vier Teilschritten abgetragen wird.

3. Verfahren nach Anspruch 1 oder 2,
**dadurch gekennzeichnet, dass**
ein Laser (22) zur Herstellung des Innenanteils (7) oder in der Winkelstellung (I) nicht verfahren wird.

4. Verfahren nach Anspruch 1 oder 2,
**dadurch gekennzeichnet, dass**
der Laser (22) bei der Herstellung des Diffusors (10) verfahren wird,
insbesondere ein zumindest einer der Winkelstellungen II, III', IV, V,
ganz insbesondere über eine innenliegende Flanke (17a, 17b) des Restes (16)

5. Verfahren nach Anspruch 1, 2 oder 4,
**dadurch gekennzeichnet, dass**
in mehreren Fertigungsschritten jeweils ein Teilvolumen (33, 36, 39, 51) des verbliebenen Rests (16) durch Abfahren insbesondere einer seitlichen Flanke des Rests (16, 33, 36, 39) des Diffusors (10) mit dem Laserstrahl (25) ausgebildet wird,
wobei der Laserstrahl (25) so ausgerichtet wird,
dass er mit der abgefahrenen Flanke einen Winkel von größer 8° einschließt.

6. Verfahren nach Anspruch 5,
**dadurch gekennzeichnet, dass**
der Laserstrah (25) so ausgerichtet ist,
dass er mit er abgefahrenen Flanke einen Winkel von größer 10° und kleiner 90°, bevorzugt von größer 15° und kleiner 80° und besonders bevorzugt von größer 20° und kleiner 60° einschließt.

7. Verfahren nach einem der vorhergehenden Ansprüche
**dadurch gekennzeichnet, dass**
ein gepulster Laserstrahl (25) verwendet wird, insbesondere zur Erzeugung des Diffusors (10) oder Abtragung des Rests (16),
oder in der zumindest zweiten Winkelstellung (II, III, IV, V).

8. Verfahren nach einem der vorhergehenden Ansprüche, bei dem ein Laserstrahl (25) mit variabler Pulsbreite verwendet wird,
insbesondere zur Erzeugung des Diffusors (10) oder Abtragung des Restes (16),
oder in der zumindest zweiten Winkelstellung (II, III, IV, V).

9. Verfahren nach Anspruch 7 oder 8,
**dadurch gekennzeichnet, dass**
ein Laserstrahl (25) mit einer Pulsbreite im Bereich von 50ns bis 800ns,
bevorzugt von 70ns bis 600ns und
insbesondere von 200ns bis 500ns auf die Bauteiloberfläche (17b) gerichtet wird,
insbesondere zur Erzeugung des Diffusors (10) oder Abtragung des Rests (16) oder
in der zumindest zweiten Winkelstellung (II, III, IV, V).

10. Verfahren nach einem der vorhergehenden Ansprüche,
**dadurch gekennzeichnet, dass**
ein Laserstrahl (25) mit einer Frequenz im Bereich von 20kHz bis 40kHz,
bevorzugt von 25kHz bis 35kHz und
insbesondere von 28kHz bis 32kHz auf die Bauteiloberfläche (17b) gerichtet wird,
insbesondere zur Erzeugung des Diffusors (10) oder Abtragang des Rests (16) oder
in der zumindest zweiten Winkelstellung (II, III, IV, V).

11. Verfahren nach einem der vorhergehenden Ansprüche 5 bis 10,
**dadurch gekennzeichnet, dass**
ein Filmkühlloch (1) in einer Turbinenschaufel (120, 130) ausgebildet wird..

12. Verfahren nach Anspruch 1,
bei dem nur ein Laser verwendet wird.

13. Verfahren nach Anspruch 1,
bei dem zumindest zwei Laser (22),
insbesondere nur zwei Laser (22) verwendet werden, die unterschiedliche Leistungsmerkmale aufweisen.

14. Verfahren nach einem öder mehreren der vorhergehenden Ansprüche,
bei dem für die Herstellung des Diffusors (10) oder die Abtragung des Rests (16) andere Laserparameter verwendet werden als zu Herstellung des Innenanteils (7).

15. Verfahren nach Anspruch 7,
**dadurch gekennzeichnet, dass**
der gepulster Laserstrahl (25) nur zum Abtrag des Rests (16) verwendet wird,

16. Verfahren nach Anspruch 8,
bei dem der Laserstrahl (25) mit variabler Pulsbreite nur zum Abtrag des Restes (16) verwendet wird.

17. Verfahren nach Anspruch 9,
**dadurch gekennzeichnet, dass**
der Laserstrahl (25) mit einer Pulsbreite im Bereich von 50ns bis 800ns, bevorzugt von 70ns bis 600ns und insbesondere von 200ns bis 500ns nur zum Abtrag des Restes (16, 18, 28) verwendet wird.

18. Verfahren nach Anspruch 10,
**dadurch gekennzeichnet, dass**
der Laserstrahl (25) mit einer Frequenz im Bereich von 20kHz bis 40kHz,
bevorzugt von 25kHz bis 35kHz und
insbesondere von 28kHz bis 32kHz nur zum Abtrag des Restes (16) verwendet wird.

19. Verfahren nach einem der vorhergehenden Ansprüche,
**dadurch gekennzeichnet, dass**
ein Filmkühlloch (1) in einer Turbinenschaufel (120, 130) ausgebildet wird,
bei dem der Diffusor (10) eine deutlich andere Geometrie gegenüber dem Innenanteil (7) aufweist, insbesondere dass sich der Querschnitt des Diffusors (10) gegenüber dem Innenanteil (7) vergrößert.

20. Verfahren nach einem oder mehreren der vorhergehenden Ansprüche,
bei dem in einem ersten Schritt zur Herstellung des Diffusors (10) oder
in der zumindest zweiten (II) Winkelstellung ein Polyeder abgetragen wird,
insbesondere ein fünfflächiger Polyeder.

21. Verfahren nach einem oder mehreren der vorergehenden Ansprüche,
bei dem in einem zweiten Schritt zur Herstellung des Diffusors (10) oder in der Winkelstellung (III) ein fünfflächiger Polyeder abgetragen wird.

22. Verfahren nach einem oder mehreren der vorhergehenden Ansprüche,
bei dem eine Spritze (31, 35, 45, 54) des abgetragenes Bereichs (33, 36, 42, 48, 16) immer weiter im Inneren des Filmkühllochs (1) liegt.

23. Verfahren nach einem oder mehreren der vorergehenden Ansprüche,
bei dem ein Diffusor (10) an der Oberfläche (12) des Substrats (4) zwei Flanken (11', 11") aufweist, die unter verschiedenen Winkeln (α, β) auseinander laufen, insbesondere ist α < β.

24. Verfahren nach Anspruch 19,
bei dem zuerst Material des Restes (16) auf der Seite mit dem größeren Winkel (β) abgetragen wird.

25. Verfahren nach Anspruch 19 oder 20,
bei dem in den letzten Schritten (IV, V) Material des Restes (16) abgetragen wird,
das an den kleineren Winkel (α) angrenzt.

## Claims

1. Process for producing a complex continuous film-cooling hole (1) in a substrate (4),
said hole (1) having an inner proportion (7),
and an asymmetrical diffuser (10),
the cross section of said diffuser (10) differing from the cross section of the inner proportion (7),
in which process at least one laser (22) or an electron beam source is used for producing inner proportion (7) and diffuser (10),
**characterized in that**
- A partial volume of the film-cooling hole (1) is formed in each of a plurality of production steps,
- the angular position of the laser (22) or of the electron beam source with respect to the substrate is changed discontinuously,
- five angular positions (I, II, III, IV, V) of the laser (22) or of the electron beam source with respect to the substrate (4) are used to produce the film-cooling hole (1), wherein a partial volume of the film-cooling hole (1) is formed in the substrate (4) in each angular position of the laser (22).

2. Process according to Claim 1,
**characterized in that**
firstly the inner proportion (7) of the film-cooling hole (1) is produced,
wherein a part of the diffuser (10) is also produced at the same time,
wherein the remnant (16) which still remains is removed in at least four partial steps (II, III, IV, V) in particular is removed in only four partial steps, in order to produce the diffuser (10).

3. Process according to Claim 1 or 2,
**characterized in that**
a laser (22) is not moved for the production of the inner proportion (7) or in the angular position (I).

4. Process according to Claim 1 or 2,
**characterized in that**
the laser (22) is moved during the production of the diffuser (10),
in particular in at least one of the angular positions II, III, IV, V,
very particularly over an inner flank (17a, 17b) of the remnant (16).

5. Process according to Claim 1, 2 or 4,
**characterized in that**
in each of a plurality of production steps a partial volume (33, 36, 39, 51) of the remaining remnant (16) is formed by tracing in particular one side flank of the remnant (16, 33, 36, 39) of the diffuser (10) with the laser beam (25),
wherein the laser beam (25) is oriented such that it includes an angle of greater than 8° with the traced flank.

6. Process according to Claim 5,
**characterized in that**
the laser beam (25) is oriented such
that it includes an angle of greater than 10° and less than 90°, preferably of greater than 15° and less than 80° and particularly preferably of greater than 20° and less than 60° with the traced flank.

7. Process according to one of the preceding claims,
**characterized in that**
a pulsed laser beam (25) is used,
in particular for producing the diffuser (10) or removing the remnant (16),
or in the at least second angular position (II, III, IV, V).

8. Process according to one of the preceding claims,
in which a laser beam (25) with a variable pulse width is used,
in particular for producing the diffuser (10) or removing the remnant (16),
or in the at least second angular position (II, III, IV, V).

9. Process according to Claim 7 or 8,
**characterized in that**
a laser beam (25) having a pulse width in the range of 50 ns to 800 ns,
preferably of 70 ns to 600 ns and
in particular of 200 ns to 500 ns, is directed onto the component surface (17b),
in particular for producing the diffuser (10) or removing the remnant (16) or
in the at least second angular position (II, III, IV, V).

10. Process according to one of the preceding claims,
**characterized in that**
a laser beam (25) with a frequency in the range of 20 kHz to 40 kHz,
preferably of 25 kHz to 35 kHz and
in particular of 28 kHz to 32 kHz, is directed onto the component surface (17b),
in particular for producing the diffuser (10) or removing the remnant (16) or
in the at least second angular position (II, III, IV, V).

11. Process according to one of the preceding Claims 5 to 10,
**characterized in that**
a film-cooling hole (1) is formed in a turbine blade or vane (120, 130)

12. Process according to Claim 1,
in which only one laser is used.

13. Process according to Claim 1,
in which at least two lasers (22),
in particular only two lasers (22) are used,
said lasers (22) having different performance features.

14. Process according to one or more of the preceding claims, in which different laser parameters are used for the production of the diffuser (10) or the removal of the remnant (16) than for the production of the inner proportion (7).

15. Process according to Claim 7,
**characterized in that**
the pulsed laser beam (25) is used only for removing the remnant (16).

16. Process according to Claim 8,
in which the laser beam (25) with a variable pulse width is used only for removing the remnant (16).

17. Process according to Claim 9,
**characterized in that**
the laser beam (25) having a pulse width in the range of 50 ns to 800 ns, preferably of 70 ns to 600 ns and in particular of 200 ns to 500 ns, is used only for removing the remnant (16, 18, 28).

18. Process according to Claim 10,
**characterized in that**
the laser beam (25) with a frequency in the range of 20 kHz to 40 kHz,
preferably of 25 kHz to 35 kHz and
in particular of 28 kHz to 32 kHz, is used only for removing the remnant (16).

19. Process according to one of the preceding claims,
**characterized in that**
a film-cooling hole (1) is formed in a turbine blade or vane (120, 130),
in which the geometry of the diffuser (10) differs significantly from the inner proportion (7),
in particular **in that** the cross section of the diffuser (10) increases compared to the inner proportion (7).

20. Process according to one or more of the preceding claims, in which a polyhedron,
in particular a five-sided polyhedron,
is removed in a first step for producing the diffuser (10) or
in the at least second (II) angular position.

21. Process according to one or more of the preceding claims, in which a five-sided polyhedron is removed in a second step for producing the diffuser (10) or in the angular position (III).

22. Process according to one or more of the preceding claims, in which a tip (31, 35, 45, 54) of the removed region (33, 36, 42, 48, 16) lies ever further in the interior of the film-cooling hole (1).

23. Process according to one or more of the preceding claims, in which a diffuser (10) has two flanks (11', 11") at the surface (12) of the substrate (4) which run apart at different angles (α, β),
where in particular α < β.

24. Process according to Claim 19,
in which firstly material of the remnant (16) on the side with the greater angle (β) is removed.

25. Process according to Claim 19 or 20,
in which, in the last steps (IV, V), material of the remnant (16)
which adjoins the smaller angle (α) is removed.

## Revendications

1. Procédé pour faire, dans un substrat ( 4 ), un trou ( 1 ) de refroidissement pelliculaire complexe traversant,
qui ( 1 ) a une partie ( 7 ) intérieure,
et un diffuseur ( 10 ) dissymétrique,
dont ( 10 ) la section transversale s'écarte de la section transversale de la partie ( 7 ) intérieure,
dans lequel on utilise au moins un laser ( 22 ) ou une source de faisceau d'électrons pour faire la partie ( 7 ) intérieure du diffuseur ( 10 ),
**caractérisé en ce que**
- on forme, en plusieurs stades de fabrication, respectivement un volume partiel du trou ( 1 ) de refroidissement pelliculaire,
- on modifie en discontinu la position angulaire du laser ( 22 ) ou de la source de faisceau d'électrons par rapport au substrat,
- on utilise cinq positions ( I, II, III, IV, V ) du laser ( 22 ) ou de la source de faisceau d'électrons par rapport au substrat ( 4 ), pour faire le trou ( 1 ) de refroidissement pelliculaire, en formant, dans chaque position angulaire du laser ( 22 ), un volume partiel du trou ( 1 ) de refroidissement pelliculaire dans le substrat ( 4 ).

2. Procédé suivant la revendication 1,
**caractérisé en ce que**
on fait d'abord la partie ( 7 ) intérieure du trou ( 1 ) de refroidissement pelliculaire,
dans lequel on fait aussi en même temps une partie du diffuseur ( 10 ),
dans lequel on enlève, en au moins quatre stades partiels ( II, III, IV, V ), le reste ( 16 ) encore subsistant pour fabriquer le diffuseur,
en enlevant notamment en seulement quatre stades partiels.

3. Procédé suivant la revendication 1 ou 2,
**caractérisé en ce que**
on ne déplace pas un laser ( 22 ) pour faire la partie ( 7 ) intérieure ou dans la position ( I ) angulaire.

4. Procédé suivant la revendication 1 ou 2,
**caractérisé en ce que**
on déplace le laser ( 22 ) lorsqu'on fait le diffuseur ( 10 ),
notamment dans au moins l'une des positions II, III, IV, V angulaires,
tout particulièrement sur un flanc ( 17a, 17b ) intérieur du reste ( 16 ).

5. Procédé suivant la revendication 1, 2 ou 4,
**caractérisé en ce que**
on forme, en plusieurs stades de fabrication, respectivement un volume ( 33, 36, 39, 51 ) partiel du reste (16) subsistant en balayant, notamment un flanc latéral du reste ( 16, 33, 36, 39 ) du diffuseur ( 10 ), par le faisceau ( 25 ) laser,
dans lequel on dirige le faisceau ( 25 ) laser,
de manière à ce qu'il fasse un angle plus grand que 8° avec le flanc balayé.

6. Procédé suivant la revendication 5,
**caractérisé en ce que**
on dirige le faisceau ( 25 ) laser de manière à ce qu'il fasse avec le flanc balayé un angle plus grand que 10° et plus petit que 90°, de préférence plus grand que 15° et plus petit que 80°, et d'une manière particulièrement préférée plus grand que 20° et plus petit que 60°.

7. Procédé suivant l'une des revendications précédentes,
**caractérisé en ce que**
on utilise un faisceau ( 25 ) laser pulsé,
notamment pour faire le diffuseur ( 10 ) ou pour enlever le reste ( 16 ),
ou dans la au moins deuxième position ( II, III, IV, V ) angulaire.

8. Procédé suivant l'une des revendications précédentes, dans lequel on utilise un faisceau ( 25 ) laser à largeur d'impulsion variable,
notamment pour faire le diffuseur ( 10 ) ou pour enlever le reste ( 16 ),
ou dans la au moins deuxième position ( II, III, IV, V ) angulaire.

9. Procédé suivant la revendication 7 ou 8,
**caractérisé en ce que**
on dirige un faisceau ( 25 ) laser d'une largeur d'impulsion dans la plage de 50 ns à 800 ns,
de préférence de 70 ns à 600 ns et
notamment de 200 ns à 500 ns sur la surface ( 17b ) de la pièce,
notamment pour faire le diffuseur ( 10 ) ou pour enlever le reste ( 16 ) ou
dans la au moins deuxième position ( II, III, IV, V ) angulaire.

10. Procédé suivant l'une des revendications précédentes, **caractérisé en ce que**
on dirige un faisceau ( 25 ) laser d'une fréquence dans la plage de 20 kHz à 40 kHz,
de préférence de 25 kHz à 35 kHz et
notamment de 28 kHz à 32 kHz sur la surface ( 17b ) de la pièce,
notamment pour faire le diffuseur ( 10 ) ou pour enlever le reste ( 16 ) ou
dans la au moins deuxième position ( II, III, IV, V ) angulaire.

11. Procédé suivant l'une des revendications précédentes 5 à 10,
**caractérisé en ce que**
on forme le trou ( 1 ) de refroidissement pelliculaire dans une aube ( 120, 130 ) de turbine.

12. Procédé suivant la revendication 1,
dans lequel on utilise seulement un laser.

13. Procédé suivant la revendication 1,
dans lequel on utilise au moins deux lasers ( 22 ), notamment seulement deux lasers ( 22 ),
qui ont des caractéristiques de puissance différentes.

14. Procédé suivant l'une ou plusieurs des revendications précédentes,
dans lequel, pour faire le diffuseur ( 10 ) ou pour enlever le reste ( 16 ), on utilise des paramètres de laser autres que pour faire la partie ( 7 ) intérieure.

15. Procédé suivant la revendication 7,
**caractérisé en ce que**
on utilise le faisceau ( 25 ) laser pulsé, seulement pour enlever le reste ( 16 ).

16. Procédé suivant la revendication 8,
dans lequel on utilise le faisceau ( 25 ) laser à largeur d'impulsion variable, seulement pour enlever le reste ( 16 ).

17. Procédé suivant la revendication 9,
**caractérisé en ce que**
on utilise le faisceau ( 25 ) laser à largeur d'impulsion dans la plage de 50 ns à 800 ns, de préférence de 70 ns à 600 ns et
notamment de 200 ns à 500 ns, seulement pour enlever le reste ( 16, 18, 28 ).

18. Procédé suivant la revendication 10,
**caractérisé en ce que**
on utilise le faisceau ( 25 ) laser d'une fréquence dans la plage de 20 kHz à 40 kHz,
de préférence de 25 kHz à 35 kHz et
notamment de 28 kHz à 32 kHz, seulement pour enlever le reste ( 16 ).

19. Procédé suivant l'une des revendications précédentes, **caractérisé en ce que**
on forme un trou ( 1 ) de refroidissement pelliculaire dans une aube ( 120, 130 ) de turbine,
dans lequel le diffuseur ( 10 ) a une géométrie nettement autre que celle de la partie ( 7 ) intérieure,
notamment **en ce que** la section transversale du diffuseur ( 10 ) est agrandie par rapport à celle de la partie ( 7 ) intérieure.

20. Procédé suivant l'une ou plusieurs des revendications précédentes,
dans lequel on enlève un polyèdre dans un premier stade pour fabriquer le diffuseur ( 10 ) ou
un polyèdre, dans la au moins la deuxième ( II ) position angulaire,
notamment un polyèdre à cinq faces.

21. Procédé suivant l'une ou plusieurs des revendications précédentes,
dans lequel on enlève un polyèdre à cinq faces dans un deuxième stade de fabrication du diffuseur ( 10 ) ou dans la position ( III ) angulaire.

22. Procédé suivant l'une ou plusieurs des revendications précédentes,
dans lequel une pointe ( 31, 35, 45, 54 ) de la partie ( 33, 36, 42, 48, 16 ) enlevée se trouve de plus en plus à l'intérieur du trou ( 1 ) de refroidissement pelliculaire.

23. Procédé suivant l'une ou plusieurs des revendications précédentes,
dans lequel un diffuseur ( 10 ) a, à la surface ( 12 ) du substrat ( 4 ), deux flancs ( 11', 11" ), qui s'écartent suivant des angles ( α, β ) différents,
en ayant notamment α < β.

24. Procédé suivant la revendication 19,
dans lequel on enlève d'abord de la matière du reste ( 16 ) du côté ayant l'angle( β ) le plus grand.

25. Procédé suivant la revendication 19 ou 20,
dans lequel on enlève dans les derniers stades ( IV, V ) de la matière du reste ( 16 ),
qui est voisine de l'angle ( α ) le plus petit.
